# EUROPEAN PATENT APPLICATION

(11) **EP 4 439 027 A1**
(43) Date of publication of application: **02.10.2024**
(21) Application number: 22913954.8
(22) Date of filing: 29.11.2022
(51) Int. Cl.: G01L 1/16

(54) **PRESSURE SENSOR BASED ON TRIBOELECTRIC NANOGENERATOR**

(30) Priority: 31.12.2021 CN 202111679373
(71) Applicant: Huawei Technologies Co., Ltd., Shenzhen, Guangdong 518129 (CN)
(72) Inventor: LIU, Chuangchuang, Shenzhen, Guangdong 518129 (CN); YAN, Wenhao, Shenzhen, Guangdong 518129 (CN); CHEN, Baoyang, Shenzhen, Guangdong 518129 (CN); YANG, Jin, Chongqing, Sichuan 400044 (CN)
(74) Representative: Thun, Clemens
(86) International application number: PCT/CN2022/134838
(87) International publication number: WO 2023/124696

(57) **Abstract**

A triboelectric nanogenerator-based pressure sensor may be deployed on a wearable device to monitor a pulse fluctuation, or may be deployed on an electronic device having a touchscreen to detect a touch action. The sensor includes: two friction layers (301, 302) and at least one electrode layer (303, 304). The two friction layers (301, 302) are respectively made of materials with different electron gain and loss capabilities, and a surface of at least one friction layer (301, 302) includes a multi-level micro-nano structure, so that when there is pressure, equal-quantity and opposite net charges corresponding to the applied pressure are induced on the two friction layers (301, 302). The multi-level micro-nano structure includes micro-nano columnar structures with at least two different heights. The electrode layer (303, 304) is configured to generate a current based on the net charges. The multi-level structure with different heights is designed, so that the pressure sensor can also maintain high sensitivity to a large static force, and a measurement range of the pressure sensor can be extended. In this way, the sensor maintains same or similar sensitivity to all static forces.

## Description

This application claims priority to Chinese Patent Application No. 202111679373.2, filed with the China National Intellectual Property Administration on December 31, 2021 and entitled "TRIBOELECTRIC NANOGENERATOR-BASED PRESSURE SENSOR", which is incorporated herein by reference in its entirety.

### TECHNICAL FIELD

This application relates to the sensor field, and in particular, to a triboelectric nanogenerator-based pressure sensor.

### BACKGROUND

In recent years, people's demand for health monitoring promotes rapid development of wearable devices. For a wearable device, a core of accurate monitoring lies in a design of a sensor. Using a sensor to accurately obtain a physiological signal of an individual is a basis for implementing accurate disease prediction to provide valuable reference information for individual health management. At present, significant progress has been made in the research of flexible sensors with different mechanisms in the world. The flexible sensors mainly include a piezoelectric sensor, a piezo-capacitive sensor, a piezoresistive sensor, and a triboelectric sensor based on an electrostatic induction principle and a charge transfer principle. Working principles of the foregoing flexible pressure sensors are to convert an external pressure signal applied to the sensor into an electrical signal for output, to feed back a magnitude and a distribution status of external pressure.

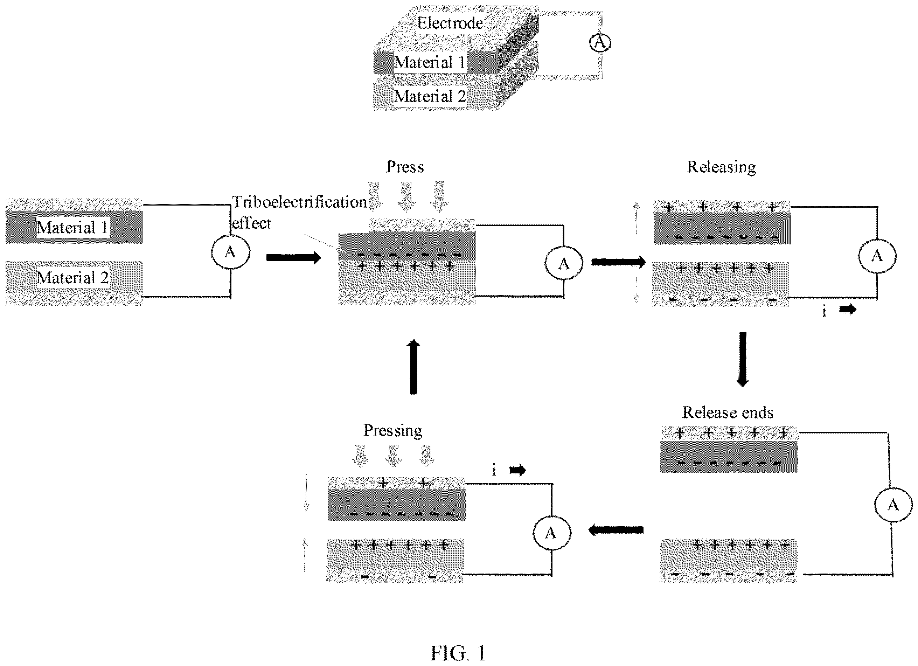

Currently, there are pressure sensors based on a resistive principle, a capacitive principle, a piezoelectric principle, and a triboelectric nanogenerator (triboelectric nanogenerator, TENG) principle. Compared with other types of pressure sensors, the TENG-based pressure sensor has advantages such as a wide range of optional materials, a good dynamic response, a quick response, and abundant details of a measured physiological signal, and therefore attracts wide attention. The TENG-based pressure sensor uses a triboelectrification principle and an electrostatic induction principle. The triboelectrification principle means that when materials with different electron gain and loss capabilities are in contact with each other, because the materials have different electron binding capabilities, electron transfer occurs, and equal-quantity and opposite net charges are carried on two materials. The electrostatic induction principle means that when an object with an electric charge (that is, an electric object) approaches a conductive object, an electric charge opposite to that of the electric object is induced on a side that is of the conductive object and that is close to the electric object. The TENG-based pressure sensor uses a combination of the two principles. As shown in FIG. 1, the TENG-based pressure sensor usually includes two types of components: two electrode layers and two friction layers. The two friction layers are placed in the middle, and the two electrode layers are placed on two sides. When friction layers made of two different materials approach and are in contact with each other under the action of an external force, the two friction layers induce equal-quantity and opposite net charges due to the triboelectrification principle. When contact surfaces of the two friction layers are separated under the action of an external force, an electric potential difference generated due to separation of two types of net charges drives electrons to flow between electrodes attached to upper and lower surfaces of the friction layers made of two materials, thereby generating a current for output. Finally, applied pressure is converted by measuring an external current and voltage.

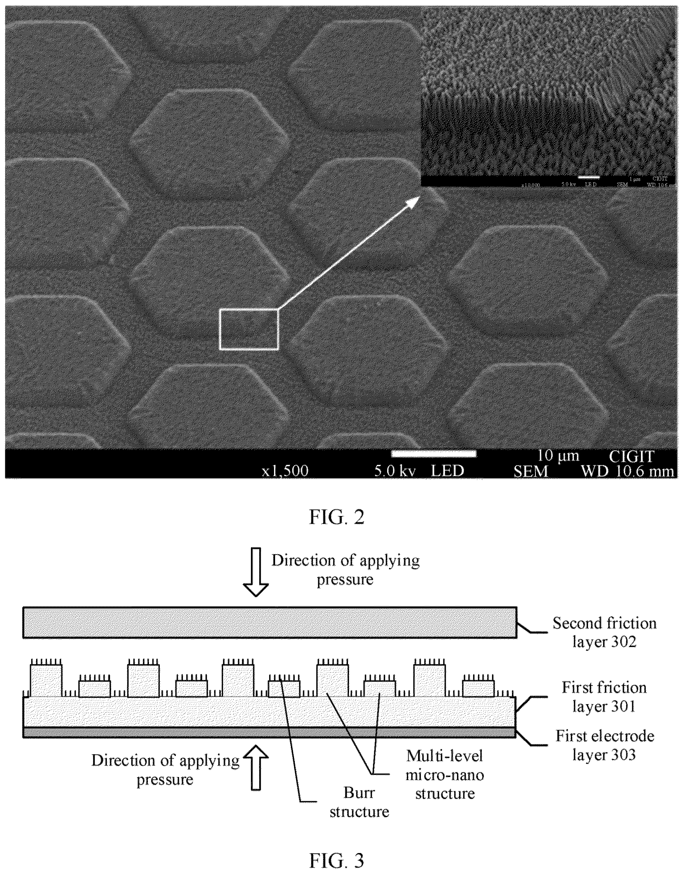

In the foregoing TENG-based pressure sensor, to increase a surface area during friction and increase a charge quantity in charge transfer to finally increase an output of a voltage or a current, a surface of one of the friction layers is usually modified. FIG. 2 is a diagram of a test result obtained by performing a scanning electron microscope (scanning electron microscope, SEM) test on a surface of a friction layer. The modified micro-nano structures (that is, protruding hexagonal structures in FIG. 2) have a same height, and are not high, that is, are relatively flat. Therefore, there are two problems: 1. Sensitivity to a large static force is insufficient because friction layers on two sides are completely in contact if externally applied pressure is large. 2. On the premise of ensuring sensitivity, a range of pressure that can be measured is small. To be specific, if sensitivity is high under a large static force, sensitivity is low under a small static force. On the contrary, if sensitivity is high under a small static force, sensitivity is low under a large static force.

### SUMMARY

Embodiments of this application provide a triboelectric nanogenerator-based pressure sensor. A surface of at least one friction layer of the TENG-based pressure sensor includes a multi-level micro-nano structure (that is, includes micro-nano columnar structures with at least two different heights). The multi-level structure with different heights is designed, so that the pressure sensor can also maintain high sensitivity to a large static force, and a measurement range of the pressure sensor can be extended. In this way, the sensor maintains same or similar sensitivity to all static forces.

Based on this, embodiments of this application provide the following technical solutions.

According to a first aspect, an embodiment of this application first provides a TENG-based pressure sensor, which may be used in the sensor field. The TENG-based sensor includes two friction layers (which are respectively a first friction layer and a second friction layer) and one electrode layer (which may be referred to as a first electrode layer). In this embodiment of this application, an electrode wire having a conductive function is also considered as an electrode layer. Details are not described below. The first friction layer and the second friction layer are made of materials with different electron gain and loss capabilities. For example, the material of the friction layer may be a material such as polytetrafluoroethylene (polytetrafluoroethylene, PTFE), polyethylene terephthalate (polyethylene terephthalate, PET), polyethylene (polyethylene, PE), polydimethylsiloxane (polydimethylsiloxane, PDMS), or fluorinated ethylene propylene (fluorinated ethylene propylene, FEP). It should be noted that the materials selected for the first friction layer and the second friction layer need to be different. The first electrode layer is made of a material having a conductive capability, for example, a metal material (gold, silver, copper, or the like) or a conductive material (graphene, indium tin oxide (indium tin oxides, ITO), silver nanowire, or the like). The first friction layer is connected to the first electrode layer. Micro-nano columnar structures with at least two different heights (which may also be referred to as a multi-level micro-nano structure) are grown on a surface of at least one friction layer in the first friction layer and the second friction layer, so that when there is pressure, equal-quantity and opposite net charges corresponding to the applied pressure are induced on the first friction layer and the second friction layer. In addition, the micro-nano columnar structures may provide a support function. The first electrode layer is configured to generate a current based on the equal-quantity and opposite net charges induced on the two friction layers. Finally, an applied pressure value may be reversely deduced through conversion between the current and the applied pressure. It should be noted that, in some application scenarios of this application, the friction layer may also be used as an electrode layer having a conductive function. This is not limited in this application.

In the foregoing implementation of this application, a surface of at least one friction layer of the TENG-based pressure sensor includes a multi-level micro-nano structure (that is, includes micro-nano columnar structures with at least two different heights). The multi-level structure with different heights is designed, so that the pressure sensor can also maintain high sensitivity to a large static force, and a measurement range of the pressure sensor can be extended. In this way, the sensor maintains same or similar sensitivity to all static forces.

In a possible implementation of the first aspect, the pressure sensor may further include an electrode layer, which may be referred to as a second electrode layer. The second electrode layer is also made of a material having a conductive capability, and the second friction layer is connected to the second electrode layer. In this case, the first electrode layer and the second electrode layer are configured to generate a current based on the equal-quantity and opposite net charges corresponding to the pressure that are induced on the first friction layer and the second friction layer.

In the foregoing implementation of this application, when the first electrode layer is not grounded, the pressure sensor further needs to additionally include the second electrode layer, to generate a current. This is feasible.

In a possible implementation of the first aspect, one micro-nano columnar structure may be made of only one material, or may be made of materials with at least two different Young's modulus values. This is not limited in this application.

In the foregoing implementation of this application, a material that forms a micro-nano columnar structure is specifically described. The material may be one material, or may be a plurality of materials (with different Young's moduli). This is optional.

In a possible implementation of the first aspect, when the micro-nano columnar structure is made of materials with at least two different Young's moduli, the micro-nano columnar structure is obtained by stacking at least two micro-nano columnar substructures, and one columnar substructure corresponds to a material with one Young's modulus. For example, if a micro-nano columnar structure is made of materials with four different Young's moduli, each material corresponds to one columnar substructure, and there are four columnar substructures in total. Heights of the columnar substructures may be the same or may be different. This is not limited herein. Then, the four columnar substructures are stacked to form the micro-nano columnar structure.

In the foregoing implementation of this application, how the micro-nano columnar structure is formed when the micro-nano columnar structure is made of materials with at least two different Young's moduli is specifically described. This is feasible.

In a possible implementation of the first aspect, the at least two micro-nano columnar substructures include but are not limited to the following: (1) The at least two micro-nano columnar substructures have a same cross-sectional area. In an example, it is assumed that there are four columnar substructures in total. From a top view of the pressure sensor, cross-sectional areas of the four columnar substructures are the same. (2) Values of cross-sectional areas of the at least two micro-nano columnar substructures are different. In this case, the at least two micro-nano columnar substructures are sequentially stacked in descending order of the values of the cross-sectional areas. In an example, it is assumed that there are four columnar substructures in total, which are respectively S 1, S2, S3, and S4, and S1<S2<S3<S4. In this case, a stacking manner on the at least one friction layer is: D is located on the surface of the at least one friction layer, C is stacked on D, B is stacked on C, and A is stacked on B.

In the foregoing implementation of this application, several implementations of stacking at least two micro-nano columnar structures are specifically described. This is flexible.

In a possible implementation of the first aspect, some target micro-nano structures with a preset height may be further grown on at least one of the first friction layer and the second friction layer. The preset height may be referred to as a first preset height h1. The target micro-nano structure is configured to provide a support function under externally applied pressure, to avoid that the first friction layer is directly attached to the second friction layer under the action of the pressure. It should be noted that in this embodiment of this application, the first preset height h1 is greater than a height of any one of the micro-nano columnar structures with the at least two different heights.

In the foregoing implementation of this application, in actual application, when large pressure is applied externally, the first friction layer and the second friction layer may be completely attached together. In this case, the pressure sensor fails, sensitivity of the pressure sensor is reduced, and a pressure measurement range of the pressure sensor is narrowed. To reduce an occurrence probability of this case, some target micro-nano structures with the preset height may be further grown on at least one of the first friction layer and the second friction layer, to increase a pressure measurement range.

In a possible implementation of the first aspect, in addition to the foregoing first friction layer, second friction layer, first electrode layer, and second electrode layer, the TENG-based pressure sensor further includes an isolation layer with a preset height between the first friction layer and the second friction layer. The preset height may be referred to as a second preset height h2, and the second preset height h2 is greater than a height of any one of the micro-nano columnar structures with the at least two different heights. The isolation layer has at least one hole with a preset hole size, and the isolation layer is configured to provide a support function under externally applied pressure, so as to avoid that the first friction layer is directly attached to the second friction layer under the action of the pressure. In this case, the multi-level micro-nano structure is grown in the hole of the isolation layer.

In the foregoing implementation of this application, a manner for providing a support function is to add the isolation layer between the two friction layers, and the multi-level micro-nano structure is grown in the hole of the isolation layer. A problem of sensor measurement inconsistency caused by a sag problem of the pressure sensor is reduced by using the isolation layer and the multi-level structure design. In addition, a height and an area of the multi-level structure, a height of the isolation layer, and a size and a shape of the hole may be designed, so that the sensor performs expression in a linearity range, and maintains same or similar sensitivity under all static force conditions.

In a possible implementation of the first aspect, a shape of the at least one hole on the isolation layer may be any shape that can be processed, for example, may be a circle, may be an ellipse, or may be a polygon. Further, the shape may be a regular polygon, for example, an equilateral triangle, a square, or a hexagon, or may be an irregular polygon, for example, a trapezoid or a non-equilateral triangle. The shape of the hole of the isolation layer is not specifically limited in this application. In addition, not only the shape of the hole can be autonomously set based on a requirement, but also a hole area of the hole can be autonomously set. This is not limited in this application.

In the foregoing implementation of this application, it is described in detail that the shape of the hole of the isolation layer can be autonomously set based on a requirement. This is flexible.

In a possible implementation of the first aspect, a shape of the micro-nano columnar structure may be any shape that can be processed and has a specific height, for example, may be any one or more of a cylinder, a multi-prism shape, a cone, a multi-pyramid shape, a hemisphere, an inverted pyramid, and a pyramid.

In the foregoing implementation of this application, it is described in detail that the shape of the micro-nano columnar structure can be autonomously processed based on a requirement. This is optional.

In a possible implementation of the first aspect, micro-nano columnar structures with different heights may be periodically arranged, or may be irregularly arranged out of order. This is not specifically limited in this application.

In the foregoing implementation of this application, several arrangement manners of the micro-nano columnar structures with different heights are specifically described. This is flexible.

In a possible implementation of the first aspect, the multi-level micro-nano structure may be considered as a level-1 micro-nano structure. To increase a friction area between the first friction layer and the second friction layer, micro-nano processing may be further performed on the multi-level micro-nano structure (that is, on each micro-nano columnar structure). Specifically, a micro-nano-level burr structure may be etched on the multi-level micro-nano structure by using an etching process. An obtained structure may also be referred to as a level-2 micro-nano structure. The burr structure may be configured to increase, under the action of the applied pressure, a charge quantity of net charges induced on the first friction layer and the second friction layer.

In the foregoing implementation of this application, the burr structure is etched on each micro-nano columnar structure to increase the friction area between the first friction layer and the second friction layer, so that a charge quantity of net charges induced on the two friction layers increases, and detection sensitivity of the pressure sensor is improved.

In a possible implementation of the first aspect, the TENG-based pressure sensor may be deployed on a wearable device, to monitor a pulse fluctuation, so that detection sensitivity can be effectively improved.

In the foregoing implementation of this application, an application scenario of the TENG-based pressure sensor provided in embodiments of this application is described, and this is feasible.

In a possible implementation of the first aspect, the TENG-based pressure sensor may be deployed on an electronic device having a touchscreen, to detect a touch action, so that detection sensitivity can be effectively improved.

In the foregoing implementation of this application, another application scenario of the TENG-based pressure sensor provided in embodiments of this application is described, and this is feasible.

A second aspect of embodiments of this application provides a TENG-based pressure sensor, which may be used in the sensor field. The TENG-based sensor includes two friction layers (which are respectively a first friction layer and a second friction layer) and one electrode layer (which may be referred to as a first electrode layer). In this embodiment of this application, an electrode wire having a conductive function is also considered as an electrode layer. Details are not described below. The first friction layer and the second friction layer are made of materials with different electron gain and loss capabilities. For example, the material of the friction layer may be a material such as PTFE, PET, PE, PDMS, or FEP. It should be noted that the materials selected for the first friction layer and the second friction layer need to be different. The first electrode layer is made of a material having a conductive capability, for example, a metal material (gold, silver, copper, or the like) or a conductive material (graphene, indium tin oxide (indium tin oxides, ITO), silver nanowire, or the like). The first friction layer is connected to the first electrode layer. At least one micro-nano columnar structure is grown on a surface of at least one friction layer in the first friction layer and the second friction layer, so that when there is pressure, equal-quantity and opposite net charges corresponding to the pressure are induced on the first friction layer and the second friction layer. The micro-nano columnar structure is made of materials with at least two different Young's moduli. The first electrode layer is configured to generate a current based on the equal-quantity and opposite net charges induced on the two friction layers. Finally, an applied pressure value may be reversely deduced through conversion between the current and the applied pressure. It should be noted that, in some application scenarios of this application, the friction layer may also be used as an electrode layer having a conductive function. This is not limited in this application.

In a possible implementation of the second aspect, the pressure sensor may further include an electrode layer, which may be referred to as a second electrode layer. The second electrode layer is also made of a material having a conductive capability, and the second friction layer is connected to the second electrode layer. In this case, the first electrode layer and the second electrode layer are configured to generate a current based on the equal-quantity and opposite net charges corresponding to the pressure that are induced on the first friction layer and the second friction layer.

In the foregoing implementation of this application, when the first electrode layer is not grounded, the pressure sensor further needs to additionally include the second electrode layer, to generate a current. This is feasible.

In a possible implementation of the second aspect, the micro-nano columnar structure is obtained by stacking at least two micro-nano columnar substructures, and one columnar substructure corresponds to a material with one Young's modulus. For example, if a micro-nano columnar structure is made of materials with four different Young's moduli, each material corresponds to one columnar substructure, and there are four columnar substructures in total. Heights of the columnar substructures may be the same or may be different. This is not limited herein. Then, the four columnar substructures are stacked to form the micro-nano columnar structure.

In the foregoing implementation of this application, how the micro-nano columnar structure is formed when the micro-nano columnar structure is made of materials with at least two different Young's moduli is specifically described. This is feasible.

In a possible implementation of the second aspect, the at least two micro-nano columnar substructures include but are not limited to the following: (1) The at least two micro-nano columnar substructures have a same cross-sectional area. In an example, it is assumed that there are four columnar substructures in total. From a top view of the pressure sensor, cross-sectional areas of the four columnar substructures are the same. (2) Values of cross-sectional areas of the at least two micro-nano columnar substructures are different. In this case, the at least two micro-nano columnar substructures are sequentially stacked in descending order of the values of the cross-sectional areas. In an example, it is assumed that there are four columnar substructures in total, which are respectively S1, S2, S3, and S4, and S1<S2<S3<S4. In this case, a stacking manner on the at least one friction layer is: D is located on the surface of the at least one friction layer, C is stacked on D, B is stacked on C, and A is stacked on B.

In the foregoing implementation of this application, several implementations of stacking at least two micro-nano columnar structures are specifically described. This is flexible.

In a possible implementation of the second aspect, there may be a plurality of micro-nano columnar structures generated on the at least one friction layer, and the plurality of micro-nano columnar structures may have a same height, or may have at least two different heights. This is not specifically limited in this application. For example, there are 100 micro-nano columnar structures, and heights of the 100 micro-nano columnar structures may be the same, and may all be h0. The 100 micro-nano columnar structures may alternatively have n different heights, where n≥2. For example, heights of 50 micro-nano columnar structures are H1, and heights of remaining 50 micro-nano columnar structures are H2.

In the foregoing implementation of this application, it is described in detail that the heights of the micro-nano columnar structures generated on the at least one friction layer may be the same or may be different, and the heights of the micro-nano columnar structures may be autonomously designed based on a range of pressure that needs to be measured and a sensitivity requirement. This is flexible.

In a possible implementation of the second aspect, micro-nano columnar structures with different heights may be periodically arranged, or may be irregularly arranged out of order. This is not specifically limited in this application.

In the foregoing implementation of this application, several arrangement manners of the micro-nano columnar structures with different heights are specifically described. This is flexible.

In a possible implementation of the second aspect, some target micro-nano structures with a preset height may be further grown on at least one of the first friction layer and the second friction layer. The preset height may be referred to as a first preset height h1. The target micro-nano structure is configured to provide a support function under externally applied pressure, to avoid that the first friction layer is directly attached to the second friction layer under the action of the pressure. It should be noted that in this embodiment of this application, the first preset height h1 is greater than a height of any one of the micro-nano columnar structures with the at least two different heights.

In the foregoing implementation of this application, in actual application, when large pressure is applied externally, the first friction layer and the second friction layer may be completely attached together. In this case, the pressure sensor fails, sensitivity of the pressure sensor is reduced, and a pressure measurement range of the pressure sensor is narrowed. To reduce an occurrence probability of this case, some target micro-nano structures with the preset height may be further grown on at least one of the first friction layer and the second friction layer, to increase a pressure measurement range.

In a possible implementation of the second aspect, in addition to the foregoing first friction layer, second friction layer, first electrode layer, and second electrode layer, the TENG-based pressure sensor further includes an isolation layer with a preset height between the first friction layer and the second friction layer. The preset height may be referred to as a second preset height h2, and the second preset height h2 is greater than a height of any one of the micro-nano columnar structures with the at least two different heights. The isolation layer has at least one hole with a preset hole size, and the isolation layer is configured to provide a support function under externally applied pressure, so as to avoid that the first friction layer is directly attached to the second friction layer under the action of the pressure. In this case, the multi-level micro-nano structure is grown in the hole of the isolation layer.

In the foregoing implementation of this application, a manner for providing a support function is to add the isolation layer between the two friction layers, and the multi-level micro-nano structure is grown in the hole of the isolation layer. A problem of sensor measurement inconsistency caused by a sag problem of the pressure sensor is reduced by using the isolation layer and the multi-level structure design. In addition, a height and an area of the multi-level structure, a height of the isolation layer, and a size and a shape of the hole may be designed, so that the sensor performs expression in a linearity range, and maintains same or similar sensitivity under all static force conditions.

In a possible implementation of the second aspect, a shape of the at least one hole on the isolation layer may be any shape that can be processed, for example, may be a circle, may be an ellipse, or may be a polygon. Further, the shape may be a regular polygon, for example, an equilateral triangle, a square, or a hexagon, or may be an irregular polygon, for example, a trapezoid or a non-equilateral triangle. The shape of the hole of the isolation layer is not specifically limited in this application. In addition, not only the shape of the hole can be autonomously set based on a requirement, but also a hole area of the hole can be autonomously set. This is not limited in this application.

In the foregoing implementation of this application, it is described in detail that the shape of the hole of the isolation layer can be autonomously set based on a requirement. This is flexible.

In a possible implementation of the second aspect, a shape of the micro-nano columnar structure may be any shape that can be processed and has a specific height, for example, may be any one or more of a cylinder, a multi-prism shape, a cone, a multi-pyramid shape, a hemisphere, an inverted pyramid, and a pyramid.

In the foregoing implementation of this application, it is described in detail that the shape of the micro-nano columnar structure can be autonomously processed based on a requirement. This is optional.

In a possible implementation of the second aspect, to increase a friction area between the first friction layer and the second friction layer, micro-nano processing may be further performed on each micro-nano columnar structure. Specifically, a micro-nano-level burr structure may be etched on the micro-nano columnar structure by using an etching process. An obtained structure may also be referred to as a level-2 micro-nano structure. The burr structure may be configured to increase, under the action of the applied pressure, a charge quantity of net charges induced on the first friction layer and the second friction layer.

In the foregoing implementation of this application, the burr structure is etched on each micro-nano columnar structure to increase the friction area between the first friction layer and the second friction layer, so that a charge quantity of net charges induced on the two friction layers increases, and detection sensitivity of the pressure sensor is improved.

In a possible implementation of the second aspect, the TENG-based pressure sensor may be deployed on a wearable device, to monitor a pulse fluctuation, so that detection sensitivity can be effectively improved.

In the foregoing implementation of this application, an application scenario of the TENG-based pressure sensor provided in embodiments of this application is described, and this is feasible.

In a possible implementation of the second aspect, the TENG-based pressure sensor may be deployed on an electronic device having a touchscreen, to detect a touch action, so that detection sensitivity can be effectively improved.

In the foregoing implementation of this application, another application scenario of the TENG-based pressure sensor provided in embodiments of this application is described, and this is feasible.

A third aspect of embodiments of this application further provides a pressure sensor. The pressure sensor may be a pressure sensor of a piezoresistive type, or may be a pressure sensor of a piezo-capacitive type, or may be a pressure sensor of a piezoelectric type. This is not specifically limited in this application. The pressure sensor includes a function layer, a first electrode layer, and a second electrode layer. The first electrode layer and the second electrode layer are made of a material having a conductive capability. In this embodiment of this application, an electrode wire having a conductive function is also considered as an electrode layer. Details are not described below. The function layer is connected to one of the first electrode layer and the second electrode layer. A surface of the function layer includes micro-nano columnar structures with at least two different heights, so that when there is pressure, a first signal corresponding to the pressure is induced on the function layer. The first electrode layer and the second electrode layer are configured to generate a second signal based on the first signal.

In the foregoing implementation of this application, the multi-level micro-nano structure (that is, micro-nano columnar structures with at least two different heights) may be used in the triboelectric nanogenerator-based pressure sensor, and pressure sensors of a piezoresistive type, a piezo-capacitive type, a piezoelectric type, and the like, and has wide applicability.

In a possible implementation of the third aspect, when the first signal is a first resistance (that is, the pressure sensor is of a piezoresistive type), the second signal is a second resistance; or when the first signal is a first capacitance (that is, the pressure sensor is of a piezo-capacitive type), the second signal is a second capacitance; or when the first signal is a first voltage (that is, the pressure sensor is of a piezoelectric type), the second signal is a second voltage.

In the foregoing implementation of this application, it is described in detail that the to-be-output second signal varies with a type of the first signal. This is applicable to various types of pressure sensors, and is flexible.

In a possible implementation of the third aspect, when the first signal is a first resistance (that is, the pressure sensor is of a piezoresistive type), the function layer is made of a material that has a resistance performance change (that is, has a resistance characteristic) under different pressure; or when the first signal is a first capacitance (that is, the pressure sensor is of a piezo-capacitive type), the function layer is made of a material that has a capacitance performance change (that is, has a capacitance characteristic) under different pressure; or when the first signal is a first voltage (that is, the pressure sensor is of a piezoelectric type), the function layer is made of a material that has a piezoelectric performance change (that is, has a piezoelectric characteristic) under different pressure.

In the foregoing implementation of this application, it is described in detail that in different types of pressure sensors, function layers have different material characteristics. This is flexible.

In a possible implementation of the third aspect, there may be one or two function layers. This is not limited in this application.

In the foregoing implementation of this application, whether a quantity of function layers is one or two is not limited, and may be selected based an actual application. This is widely applicable.

In a possible implementation of the third aspect, one micro-nano columnar structure may be made of only one material, or may be made of materials with at least two different Young's modulus values. This is not limited in this application.

In the foregoing implementation of this application, a material that forms a micro-nano columnar structure is specifically described. The material may be one material, or may be a plurality of materials (with different Young's moduli). This is optional.

In a possible implementation of the third aspect, the micro-nano columnar structure is obtained by stacking at least two micro-nano columnar substructures, and each of the columnar substructures is made of a material with one Young's modulus. In other words, when the micro-nano columnar structure is made of materials with at least two different Young's moduli, the micro-nano columnar structure is obtained by stacking at least two micro-nano columnar substructures, and one columnar substructure corresponds to a material with one Young's modulus. For example, if a micro-nano columnar structure is made of materials with four different Young's moduli, each material corresponds to one columnar substructure, and there are four columnar substructures in total. Heights of the columnar substructures may be the same or may be different. This is not limited herein. Then, the four columnar substructures are stacked to form the micro-nano columnar structure.

In the foregoing implementation of this application, how the micro-nano columnar structure is formed when the micro-nano columnar structure is made of materials with at least two different Young's moduli is specifically described. This is feasible.

In a possible implementation of the third aspect, the at least two micro-nano columnar substructures have a same cross-sectional area; or the at least two micro-nano columnar substructures are sequentially stacked in descending order of cross-sectional areas. To be specific, the at least two micro-nano columnar substructures include but are not limited to the following: (1) The at least two micro-nano columnar substructures have a same cross-sectional area. In an example, it is assumed that there are four columnar substructures in total. From a top view of the pressure sensor, cross-sectional areas of the four columnar substructures are the same. (2) Values of cross-sectional areas of the at least two micro-nano columnar substructures are different. In this case, the at least two micro-nano columnar substructures are sequentially stacked in descending order of the values of the cross-sectional areas.

In the foregoing implementation of this application, several implementations of stacking at least two micro-nano columnar structures are specifically described. This is flexible.

In a possible implementation of the third aspect, the function layer further includes a target micro-nano structure with a first preset height, where the first preset height is greater than a height of any one of the micro-nano columnar structures with the at least two different heights. In other words, some target micro-nano structures with a preset height may be further grown on the function layer. The preset height may be referred to as a first preset height h1. The target micro-nano structure is configured to provide a support function under externally applied pressure, to avoid that the two electrode layers are directly attached under the action of the pressure. It should be noted that in this embodiment of this application, the first preset height h1 is greater than a height of any one of the micro-nano columnar structures with the at least two different heights.

In the foregoing implementation of this application, in actual application, when large pressure is applied externally, the two electrode layers (it is assumed that the electrode layer is not an electrode wire) may be completely attached together. In this case, the pressure sensor fails, sensitivity of the pressure sensor is reduced, and a pressure measurement range of the pressure sensor is narrowed. To reduce an occurrence probability of this case, some target micro-nano structures with the preset height may be further grown on the function layer, to increase a pressure measurement range.

In a possible implementation of the third aspect, the sensor further includes an isolation layer with a second preset height, where the isolation layer has at least one hole with a preset hole size, the isolation layer is located on the function layer, the micro-nano columnar structure is deployed in the hole of the isolation layer, and the second preset height is greater than a height of any one of the micro-nano columnar structures with the at least two different heights. In other words, in addition to the foregoing function layer, first electrode layer, and second electrode layer, the pressure sensor further includes an isolation layer with a preset height on the function layer. The preset height may be referred to as a second preset height h2, and the second preset height h2 is greater than a height of any one of the micro-nano columnar structures with the at least two different heights. The isolation layer has at least one hole with a preset hole size, and the isolation layer is configured to provide a support function under externally applied pressure, to avoid that the two electrode layers are directly attached under the action of the pressure (it is assumed that the electrode layer is not an electrode wire). In this case, the multi-level micro-nano structure is grown in the hole of the isolation layer.

In the foregoing implementation of this application, a manner for providing a support function is to add the isolation layer on the function layer, and the multi-level micro-nano structure is grown in the hole of the isolation layer. A problem of sensor measurement inconsistency caused by a sag problem of the pressure sensor is reduced by using the isolation layer and the multi-level structure design. In addition, a height and an area of the multi-level structure, a height of the isolation layer, and a size and a shape of the hole may be designed, so that the sensor performs expression in a linearity range, and maintains same or similar sensitivity under all static force conditions.

In a possible implementation of the third aspect, a shape of the at least one hole includes any one or more of the following: a circle, an ellipse, and a polygon. In other words, the shape of the at least one hole on the isolation layer may be any shape that can be processed, for example, may be a circle, may be an ellipse, or may be a polygon. Further, the shape may be a regular polygon, for example, an equilateral triangle, a square, or a hexagon, or may be an irregular polygon, for example, a trapezoid or a non-equilateral triangle. The shape of the hole of the isolation layer is not specifically limited in this application. In addition, not only the shape of the hole can be autonomously set based on a requirement, but also a hole area of the hole can be autonomously set. This is not limited in this application.

In the foregoing implementation of this application, it is described in detail that the shape of the hole of the isolation layer can be autonomously set based on a requirement. This is flexible.

In a possible implementation of the third aspect, a shape of the micro-nano columnar structure may be any shape that can be processed and has a specific height. For example, the shape of the micro-nano columnar structure includes any one or more of the following: a cylinder, a multi-prism shape, a cone, a multi-pyramid shape, a hemisphere, an inverted pyramid, and a pyramid.

In the foregoing implementation of this application, it is described in detail that the shape of the micro-nano columnar structure can be autonomously processed based on a requirement. This is optional.

In a possible implementation of the third aspect, micro-nano columnar structures with different heights may be periodically arranged, or may be irregularly arranged out of order. This is not specifically limited in this application.

In the foregoing implementation of this application, several arrangement manners of the micro-nano columnar structures with different heights are specifically described. This is flexible.

In a possible implementation of the third aspect, the multi-level micro-nano structure may be considered as a level-1 micro-nano structure. To increase a contact area of the function layer, micro-nano processing may be further performed on the multi-level micro-nano structure (that is, on each micro-nano columnar structure). Specifically, a micro-nano-level burr structure may be etched on the multi-level micro-nano structure by using an etching process. An obtained structure may also be referred to as a level-2 micro-nano structure. The burr structure may be configured to increase, under the action of the applied pressure, strength of the first signal induced on the function layer.

In the foregoing implementation of this application, the burr structure is etched on each micro-nano columnar structure to increase the contact area between the function layer and the outside, so that the strength of the first signal induced on the function layer increases, and detection sensitivity of the pressure sensor is improved.

In a possible implementation of the third aspect, the pressure sensor may be deployed on a wearable device, to monitor a pulse fluctuation, so that detection sensitivity can be effectively improved.

In the foregoing implementation of this application, an application scenario of the pressure sensor provided in embodiments of this application is described, and this is feasible.

In a possible implementation of the third aspect, the pressure sensor may be deployed on an electronic device having a touchscreen, to detect a touch action, so that detection sensitivity can be effectively improved.

In the foregoing implementation of this application, another application scenario of the pressure sensor provided in embodiments of this application is described, and this is feasible.

A fourth aspect of embodiments of this application further provides a pressure sensor. The pressure sensor may be a pressure sensor of a piezoresistive type, or may be a pressure sensor of a piezo-capacitive type, or may be a pressure sensor of a piezoelectric type. This is not specifically limited in this application. The pressure sensor includes a function layer, a first electrode layer, and a second electrode layer. The first electrode layer and the second electrode layer are made of a material having a conductive capability. In this embodiment of this application, an electrode wire having a conductive function is also considered as an electrode layer. Details are not described below. The function layer is connected to one of the first electrode layer and the second electrode layer. A surface of the function layer includes a micro-nano columnar structure, so that when there is pressure, a first signal corresponding to the pressure is induced on the function layer. The micro-nano columnar structure is made of materials with at least two different Young's moduli. The first electrode layer and the second electrode layer are configured to generate a second signal based on the first signal.

In the foregoing implementation of this application, the multi-level micro-nano structure (that is, micro-nano columnar structures with at least two different heights) may be used in the triboelectric nanogenerator-based pressure sensor, and pressure sensors of a piezoresistive type, a piezo-capacitive type, a piezoelectric type, and the like, and has wide applicability.

In a possible implementation of the fourth aspect, when the first signal is a first resistance (that is, the pressure sensor is of a piezoresistive type), the second signal is a second resistance; or when the first signal is a first capacitance (that is, the pressure sensor is of a piezo-capacitive type), the second signal is a second capacitance; or when the first signal is a first voltage (that is, the pressure sensor is of a piezoelectric type), the second signal is a second voltage.

In the foregoing implementation of this application, it is described in detail that the tobe-output second signal varies with a type of the first signal. This is applicable to various types of pressure sensors, and is flexible.

In a possible implementation of the fourth aspect, when the first signal is a first resistance (that is, the pressure sensor is of a piezoresistive type), the function layer is made of a material that has a resistance performance change (that is, has a resistance characteristic) under different pressure; or when the first signal is a first capacitance (that is, the pressure sensor is of a piezo-capacitive type), the function layer is made of a material that has a capacitance performance change (that is, has a capacitance characteristic) under different pressure; or when the first signal is a first voltage (that is, the pressure sensor is of a piezoelectric type), the function layer is made of a material that has a piezoelectric performance change (that is, has a piezoelectric characteristic) under different pressure.

In the foregoing implementation of this application, it is described in detail that in different types of pressure sensors, function layers have different material characteristics. This is flexible.

In a possible implementation of the fourth aspect, there may be one or two function layers. This is not limited in this application.

In the foregoing implementation of this application, whether a quantity of function layers is one or two is not limited, and may be selected based an actual application. This is widely applicable.

In a possible implementation of the fourth aspect, the micro-nano columnar structure is obtained by stacking at least two micro-nano columnar substructures, and one columnar substructure corresponds to a material with one Young's modulus. For example, if a micro-nano columnar structure is made of materials with four different Young's moduli, each material corresponds to one columnar substructure, and there are four columnar substructures in total. Heights of the columnar substructures may be the same or may be different. This is not limited herein. Then, the four columnar substructures are stacked to form the micro-nano columnar structure.

In the foregoing implementation of this application, how the micro-nano columnar structure is formed when the micro-nano columnar structure is made of materials with at least two different Young's moduli is specifically described. This is feasible.

In a possible implementation of the fourth aspect, the at least two micro-nano columnar substructures have a same cross-sectional area; or the at least two micro-nano columnar substructures are sequentially stacked in descending order of cross-sectional areas. To be specific, the at least two micro-nano columnar substructures include but are not limited to the following: (1) The at least two micro-nano columnar substructures have a same cross-sectional area. In an example, it is assumed that there are four columnar substructures in total. From a top view of the pressure sensor, cross-sectional areas of the four columnar substructures are the same. (2) Values of cross-sectional areas of the at least two micro-nano columnar substructures are different. In this case, the at least two micro-nano columnar substructures are sequentially stacked in descending order of the values of the cross-sectional areas.

In the foregoing implementation of this application, several implementations of stacking at least two micro-nano columnar structures are specifically described. This is flexible.

In a possible implementation of the fourth aspect, a plurality of micro-nano columnar structures have at least two different heights. In other words, there may be a plurality of micro-nano columnar structures generated on the function layer, and the plurality of micro-nano columnar structures may have a same height, or may have at least two different heights. This is not specifically limited in this application. For example, there are 100 micro-nano columnar structures, and heights of the 100 micro-nano columnar structures may be the same, and may all be h0. The 100 micro-nano columnar structures may alternatively have n different heights, where n≥2. For example, heights of 50 micro-nano columnar structures are H1, and heights of remaining 50 micro-nano columnar structures are H2.

In the foregoing implementation of this application, it is described in detail that the heights of the micro-nano columnar structures generated on the function layer may be the same or may be different, and the heights of the micro-nano columnar structures may be autonomously designed based on a range of pressure that needs to be measured and a sensitivity requirement. This is flexible.

In a possible implementation of the fourth aspect, micro-nano columnar structures with different heights may be periodically arranged, or may be irregularly arranged out of order. This is not specifically limited in this application.

In the foregoing implementation of this application, several arrangement manners of the micro-nano columnar structures with different heights are specifically described. This is flexible.

In a possible implementation of the fourth aspect, the function layer further includes a target micro-nano structure with a first preset height, where the first preset height is greater than a height of any one of the micro-nano columnar structures with the at least two different heights. In other words, some target micro-nano structures with a preset height may be further grown on the function layer. The preset height may be referred to as a first preset height h1. The target micro-nano structure is configured to provide a support function under externally applied pressure, to avoid that the two electrode layers are directly attached under the action of the pressure. It should be noted that in this embodiment of this application, the first preset height h1 is greater than a height of any one of the micro-nano columnar structures with the at least two different heights.

In the foregoing implementation of this application, in actual application, when large pressure is applied externally, the two electrode layers (it is assumed that the electrode layer is not an electrode wire) may be completely attached together. In this case, the pressure sensor fails, sensitivity of the pressure sensor is reduced, and a pressure measurement range of the pressure sensor is narrowed. To reduce an occurrence probability of this case, some target micro-nano structures with the preset height may be further grown on the function layer, to increase a pressure measurement range.

In a possible implementation of the fourth aspect, the sensor further includes an isolation layer with a second preset height, where the isolation layer has at least one hole with a preset hole size, the isolation layer is located on the function layer, the micro-nano columnar structure is deployed in the hole of the isolation layer, and the second preset height is greater than a height of any one of the micro-nano columnar structures with the at least two different heights. In other words, in addition to the foregoing function layer, first electrode layer, and second electrode layer, the pressure sensor further includes an isolation layer with a preset height on the function layer. The preset height may be referred to as a second preset height h2, and the second preset height h2 is greater than a height of any one of the micro-nano columnar structures with the at least two different heights. The isolation layer has at least one hole with a preset hole size, and the isolation layer is configured to provide a support function under externally applied pressure, to avoid that the two electrode layers are directly attached under the action of the pressure (it is assumed that the electrode layer is not an electrode wire). In this case, the multi-level micro-nano structure is grown in the hole of the isolation layer.

In the foregoing implementation of this application, a manner for providing a support function is to add the isolation layer on the function layer, and the multi-level micro-nano structure is grown in the hole of the isolation layer. A problem of sensor measurement inconsistency caused by a sag problem of the pressure sensor is reduced by using the isolation layer and the multi-level structure design. In addition, a height and an area of the multi-level structure, a height of the isolation layer, and a size and a shape of the hole may be designed, so that the sensor performs expression in a linearity range, and maintains same or similar sensitivity under all static force conditions.

In a possible implementation of the fourth aspect, a shape of the at least one hole includes any one or more of the following: a circle, an ellipse, and a polygon. In other words, the shape of the at least one hole on the isolation layer may be any shape that can be processed, for example, may be a circle, may be an ellipse, or may be a polygon. Further, the shape may be a regular polygon, for example, an equilateral triangle, a square, or a hexagon, or may be an irregular polygon, for example, a trapezoid or a non-equilateral triangle. The shape of the hole of the isolation layer is not specifically limited in this application. In addition, not only the shape of the hole can be autonomously set based on a requirement, but also a hole area of the hole can be autonomously set. This is not limited in this application.

In the foregoing implementation of this application, it is described in detail that the shape of the hole of the isolation layer can be autonomously set based on a requirement. This is flexible.

In a possible implementation of the fourth aspect, a shape of the micro-nano columnar structure may be any shape that can be processed and has a specific height. For example, the shape of the micro-nano columnar structure includes any one or more of the following: a cylinder, a multi-prism shape, a cone, a multi-pyramid shape, a hemisphere, an inverted pyramid, and a pyramid.

In the foregoing implementation of this application, it is described in detail that the shape of the micro-nano columnar structure can be autonomously processed based on a requirement. This is optional.

In a possible implementation of the fourth aspect, the multi-level micro-nano structure may be considered as a level-1 micro-nano structure. To increase a contact area of the function layer, micro-nano processing may be further performed on the multi-level micro-nano structure (that is, on each micro-nano columnar structure). Specifically, a micro-nano-level burr structure may be etched on the multi-level micro-nano structure by using an etching process. An obtained structure may also be referred to as a level-2 micro-nano structure. The burr structure may be configured to increase, under the action of the applied pressure, strength of the first signal induced on the function layer.

In the foregoing implementation of this application, the burr structure is etched on each micro-nano columnar structure to increase the contact area between the function layer and the outside, so that the strength of the first signal induced on the function layer increases, and detection sensitivity of the pressure sensor is improved.

In a possible implementation of the fourth aspect, the pressure sensor may be deployed on a wearable device, to monitor a pulse fluctuation, so that detection sensitivity can be effectively improved.

In the foregoing implementation of this application, an application scenario of the pressure sensor provided in embodiments of this application is described, and this is feasible.

In a possible implementation of the fourth aspect, the pressure sensor may be deployed on an electronic device having a touchscreen, to detect a touch action, so that detection sensitivity can be effectively improved.

In the foregoing implementation of this application, another application scenario of the pressure sensor provided in embodiments of this application is described, and this is feasible.

A fifth aspect of embodiments of this application further provides an electronic device. The electronic device may include the pressure sensor according to any one of the first aspect or the possible implementations of the first aspect, or the electronic device may include the pressure sensor according to any two of the possible implementations of the second aspect or the first aspect, or the electronic device may include the pressure sensor according to any one of the third aspect or the possible implementations of the third aspect, or the electronic device may include the pressure sensor according to any two of the fourth aspect or the possible implementations of the fourth aspect.

### BRIEF DESCRIPTION OF DRAWINGS

FIG. 1 is a diagram of a principle of a TENG-based pressure sensor;
FIG. 2 is a diagram of a test result obtained by performing an SEM test on a surface of a friction layer;
FIG. 3 is a diagram of a structure of a TENG-based pressure sensor according to an embodiment of this application;
FIG. 4 is a diagram of another structure of a TENG-based pressure sensor according to an embodiment of this application;
FIG. 5 is a diagram of another structure of a TENG-based pressure sensor according to an embodiment of this application;
FIG. 6 is a diagram of another structure of a TENG-based pressure sensor according to an embodiment of this application;
FIG. 7 is a diagram of another structure of a TENG-based pressure sensor according to an embodiment of this application;
FIG. 8 is a diagram of another structure of a TENG-based pressure sensor according to an embodiment of this application;
FIG. 9 is a diagram of another structure of a TENG-based pressure sensor according to an embodiment of this application;
FIG. 10 is a diagram of another structure of a TENG-based pressure sensor according to an embodiment of this application;
FIG. 11 is a diagram of another structure of a TENG-based pressure sensor according to an embodiment of this application;
FIG. 12 is a diagram of another structure of a TENG-based pressure sensor according to an embodiment of this application;
FIG. 13 is a diagram of a structure of a TENG-based pressure sensor having a target micro-nano structure with a first preset height according to an embodiment of this application;
FIG. 14 is a diagram of a processing process of a friction layer according to an embodiment of this application;
FIG. 15 is a diagram of another structure of a TENG-based pressure sensor according to an embodiment of this application;
FIG. 16 is a diagram in which a multi-level micro-nano structure is grown in a hole in an isolation layer according to an embodiment of this application;
FIG. 17 is a diagram of a hole shape according to an embodiment of this application;
FIG. 18 is a diagram of a processing process of a friction layer and an isolation layer according to an embodiment of this application;
FIG. 19 is a diagram of a structure of a pressure sensor according to an embodiment of this application;
FIG. 20 is a diagram of another structure of a pressure sensor according to an embodiment of this application;
FIG. 21 is a diagram of another structure of a pressure sensor according to an embodiment of this application;
FIG. 22 is a diagram of another structure of a pressure sensor according to an embodiment of this application;
FIG. 23 is a diagram of a structure of a function layer according to an embodiment of this application; and
FIG. 24 is a diagram of another structure of a function layer according to an embodiment of this application.

### DESCRIPTION OF EMBODIMENTS

Embodiments of this application provide a triboelectric nanogenerator-based pressure sensor. A surface of at least one friction layer of the pressure sensor includes a multi-level micro-nano structure (that is, includes micro-nano columnar structures with at least two different heights). The multi-level structure with different heights is designed, so that the pressure sensor can also maintain high sensitivity to a large static force, and a measurement range of the pressure sensor can be extended. In this way, the sensor maintains same or similar sensitivity to all static forces.

In the specification, claims, and accompanying drawings of this application, terms "first", "second", and the like are intended to distinguish between similar objects but do not necessarily indicate a specific order or sequence. It should be understood that the terms used in such a way are interchangeable in proper circumstances. This is merely a discrimination manner that is used when objects having a same attribute are described in embodiments of this application. In addition, the terms "include", "have", and any variants thereof are intended to cover nonexclusive inclusion, so that a process, method, system, product, or device including a series of units is not necessarily limited to those units, but may include other units that are not clearly listed or are inherent to the process, method, product, or device.

Embodiments of this application relate to a lot of related knowledge about a sensor. To better understand the solutions in embodiments of this application, the following first describes related terms and concepts that may be used in embodiments of this application. It should be understood that explanations of related concepts may be limited due to specific situations of embodiments of this application, but this does not mean that this application can only be limited to the specific situations. There may be differences between specific situations in different embodiments. This is not specifically limited herein.

### (1) Pressure sensor

The pressure sensor is a device or an apparatus that can sense a pressure signal and convert the pressure signal into an available output electrical signal according to a specific rule. The pressure sensor is the most commonly used sensor in industrial practice, is widely used in various industrial automatic control environments, and relates to many industries such as water conservancy and hydropower, railway transportation, intelligent building, automatic control in production, aerospace, military, petrochemical engineering, oil wells, electric power, shipping, machine tools, and pipelines.

In actual application, several typical pressure sensors include a resistive pressure sensor, a capacitive pressure sensor, a piezoelectric pressure sensor, and a TENG-based pressure sensor.

When pressure is externally applied to the resistive pressure sensor, a change of a contact area between two electrode plates under the action of the pressure causes a resistance change, and a pressure value can be reversely deduced by using a resistance value of an external circuit through calibration on the resistance value and the pressure value. Similarly, when pressure is externally applied to the capacitive pressure sensor, a change of a spacing between two electrode plates under the action of the pressure causes a capacitance change, and a pressure value can be reversely deduced through calibration on a capacitance value and the pressure value. When pressure is externally applied to the piezoelectric pressure sensor, deformation of two electrode plates under the action of the external force causes a charge change, and a pressure value can be reversely deduced by using a voltage of an external circuit through calibration on a voltage value and the pressure value. When the TENG-based pressure sensor is under the action of external pressure, the pressure causes a change of a distance between friction layers, and a charge change generated due to friction causes a change of an external voltage. Materials of the friction layers are usually materials with greatly different electron gain and loss capabilities. Therefore, the external force causes a great change of voltages on two sides of an electrode.

Characteristics of the foregoing four typical pressure sensors may be summarized, as shown in Table 1. Compared with other types of pressure sensors, the TENG-based pressure sensor has advantages such as a wide range of optional materials, a good dynamic response, a quick response, and abundant details of a measured physiological signal, and therefore attracts wide attention.

**Table 1: Characteristics of pressure sensors based on four principles**

| Type | Characteristic |
|---|---|
| Piezoresistive pressure sensor | Availability for measuring dynamic and static pressure signals but severe hysteresis phenomenon |
| Capacitive pressure sensor | High measurement precision, good dynamic response characteristic, but susceptibleness to interference by an external environment (parasitic capacitor) |
| Piezoelectric pressure sensor | Simple structure, high sensitivity, but customized material |
| TENG-based pressure sensor | Wide range of optional materials, good dynamic response, quick response, and abundant details of a measured physiological signal |

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

The following separately describes the technical solutions in embodiments of this application from perspectives of different types of pressure sensors.

### 1. TENG-based pressure sensor

First, a TENG-based pressure sensor provided in an embodiment of this application is described. For details, refer to FIG. 3. FIG. 3 is a diagram of a structure of a TENG-based pressure sensor according to an embodiment of this application. The TENG-based pressure sensor includes two friction layers (which are respectively a first friction layer 301 and a second friction layer 302) and one electrode layer (which may be referred to as a first electrode layer 303). The first friction layer 301 and the second friction layer 302 are made of materials having different electron obtaining and loss capabilities. For example, a material of the friction layer may be a material such as PTFE, PET, PE, PDMS, or FEP. It should be noted that the materials selected for the first friction layer 301 and the second friction layer 302 need to be different. The first electrode layer 301 is made of a material having a conductive capability, for example, a metal material (gold, silver, copper, or the like) or a conductive material (graphene, silver nanowire, ITO, or the like). The first friction layer 301 is connected to the first electrode layer 303. Specifically, a multi-level micro-nano structure is grown on a surface of at least one of the first friction layer 301 and the second friction layer 302 (FIG. 3 shows that a surface of the first friction layer 301 includes a multi-level micro-nano structure, but actually, a multi-level micro-nano structure may alternatively be generated on a surface of the second friction layer 302, and details are not described herein), so that when there is pressure, equal-quantity and opposite net charges corresponding to the applied pressure are induced on the first friction layer 301 and the second friction layer 302. In addition, the multi-level micro-nano structure may provide a support function. The first electrode layer 303 is configured to generate a current based on the equal-quantity and opposite net charges induced on the two friction layers. Finally, an applied pressure value is reversely deduced through conversion between the current and the applied pressure (in some implementations, a voltage change may alternatively be calculated).

It should be noted herein that, in this embodiment of this application, the first electrode layer 303 may alternatively be an electrode wire having a conductive function. This is not limited in this application. It should be further noted that, in this embodiment of this application, when there is only the first electrode layer 303, the first electrode layer 303 is grounded. It should be further noted that, in some application scenarios of this application, the friction layer may also be used as an electrode layer having a conductive function. This is not limited in this application.

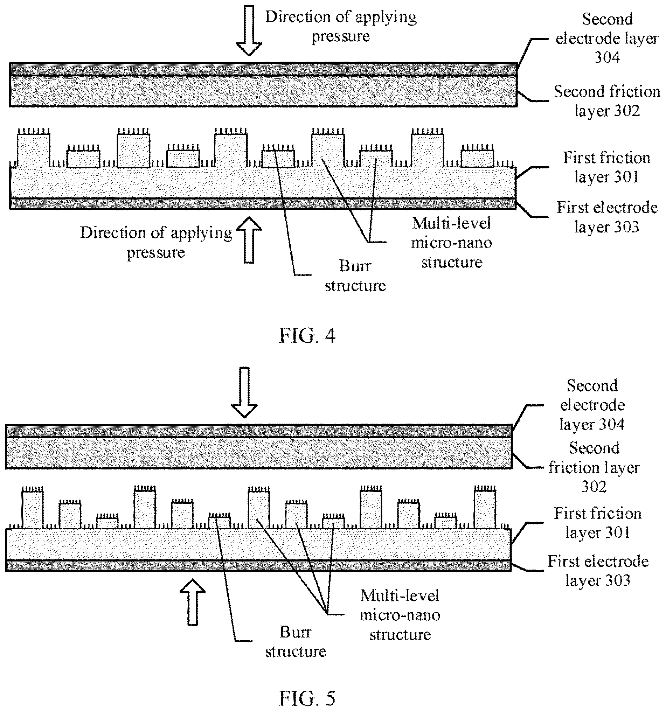

It should be noted that, in some other implementations of this application, the TENG-based pressure sensor may further include a second electrode layer. For details, refer to FIG. 4. FIG. 4 is a diagram of another structure of a TENG-based pressure sensor according to an embodiment of this application. The TENG-based pressure sensor includes two friction layers (which are respectively a first friction layer 301 and a second friction layer 302) and two electrode layers (which are respectively a first electrode layer 303 and a second electrode layer 304). The first friction layer 301 and the second friction layer 302 are made of materials having different electron obtaining and loss capabilities. For example, a material of the friction layer may be a material such as PTFE, PET, PE, PDMS, or FEP. It should be noted that the materials selected for the first friction layer 301 and the second friction layer 302 need to be different. The first electrode layer 301 and the second electrode layer 302 are made of a material having a conductive capability, for example, a metal material (gold, silver, copper, or the like) or a conductive material (graphene, silver nanowire, ITO, or the like). The first friction layer 301 is connected to the first electrode layer 303, and the second friction layer 302 is connected to the second electrode layer 304.

Specifically, a multi-level micro-nano structure is grown on a surface of at least one of the first friction layer 301 and the second friction layer 302 (FIG. 3 shows that a surface of the first friction layer 301 includes a multi-level micro-nano structure, but actually, a multi-level micro-nano structure may alternatively be generated on a surface of the second friction layer 302, and details are not described herein), so that when there is pressure, equal-quantity and opposite net charges corresponding to the applied pressure are induced on the first friction layer 301 and the second friction layer 302. In addition, the multi-level micro-nano structure may provide a support function. The first electrode layer 303 and the second electrode layer 304 are configured to generate a current based on the equal-quantity and opposite net charges induced on the two friction layers. Finally, an applied pressure value is reversely deduced through conversion between the current and the applied pressure. For ease of description, in the following embodiments, an example in which a TENG-based pressure sensor includes two electrode layers is used for illustration.

It should be noted that, in embodiments of this application, the multi-level micro-nano structure includes micro-nano columnar structures with at least two different heights. FIG. 4 shows that micro-nano columnar structures with two different heights are periodically arranged. In actual application, the multi-level micro-nano structure may include micro-nano columnar structures with n different heights, where n≥2.

In an example, FIG. 4 shows that micro-nano columnar structures with different heights are periodically arranged when n=2. In another example, FIG. 5 shows that micro-nano columnar structures with different heights are periodically arranged when n=4. Generally, a larger value of n indicates a larger quantity of levels of the multi-level micro-nano structure, and more different heights formed between the first friction layer 301 and the second friction layer 302. Therefore, under the action of an external force, net charges generated at different places are different because of different heights, thereby indirectly improving sensitivity of the pressure sensor.

It should be noted that, in the embodiments corresponding to FIG. 4 and FIG. 5, micro-nano columnar structures with different heights are periodically arranged. In some other implementations of this application, in addition to periodic arrangement, irregular out-of-order arrangement may alternatively be used. This is not specifically limited in this application.

It should be further noted that, in embodiments of this application, the applied pressure may be applied to the first electrode layer 303, or may be applied to the second electrode layer 304, or may be applied to both the first electrode layer 303 and the second electrode layer 304 (FIG. 4 shows that the pressure is applied to the two electrode layers). This is specifically determined by an actual application scenario of the TENG-based pressure sensor. This is not limited in this application.

It should be further noted that, in some implementations of this application, the micro-nano columnar structure may be considered as a level-1 micro-nano structure. To increase a friction area between the first friction layer 301 and the second friction layer 302, micro-nano processing may be further performed on the micro-nano columnar structure. Specifically, a micro-nano-level burr structure may be etched on the micro-nano columnar structure by using an etching process (as shown in FIG. 4 or FIG. 5). An obtained structure may also be referred to as a level-2 micro-nano structure. The burr structure may be configured to increase the friction area between the first friction layer 301 and the second friction layer 302 under the action of the applied pressure, so that a charge quantity of net charges induced on the two friction layers increases, and detection sensitivity of the pressure sensor is improved.

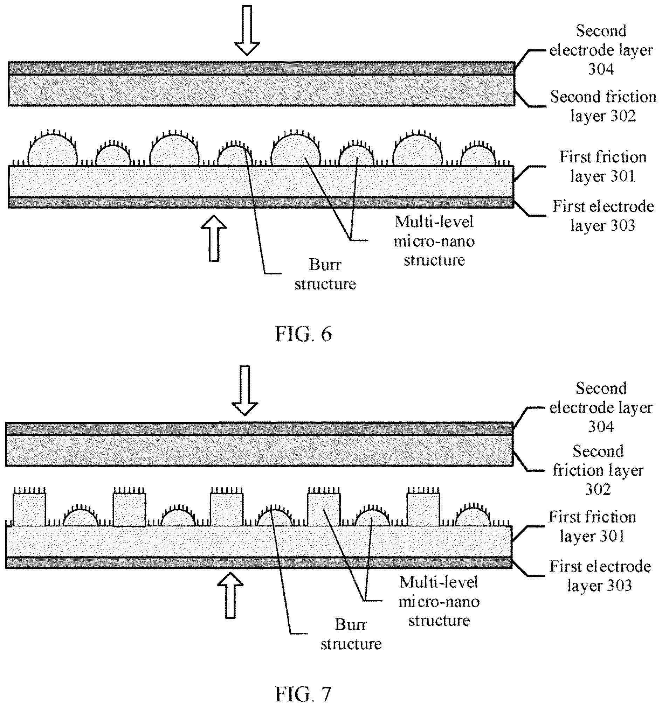

It should be further noted that, in some implementations of this application, a shape of the micro-nano columnar structure may be any shape that can be processed and that has a specific height, for example, may be any one or more of a cylinder, a multi-prism shape, a cone, a multi-pyramid shape, a hemisphere, an inverted pyramid, and a pyramid. In the embodiments shown in FIG. 4 and FIG. 5, a shape of a schematic micro-nano columnar structure is a cubic shape (which is a type of multi-prism shape). In FIG. 6, a shape of a schematic micro-nano columnar structure is a semicircle shape (it is assumed that n=2, that is, micro-nano columnar structures with two different heights are periodically arranged). In FIG. 7, shapes of schematic micro-nano columnar structures include a combination of a semicircle shape and a cubic shape (it is assumed that n=2, that is, micro-nano columnar structures with two different heights are periodically arranged). Details are not shown in this application by using an example.

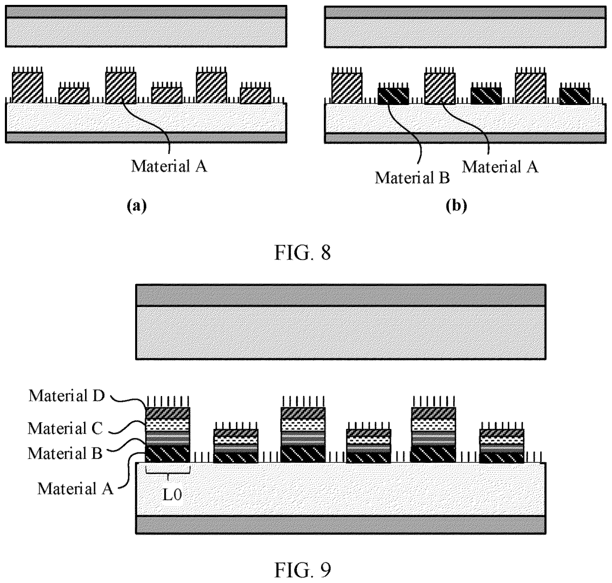

It should be further noted that, in some other implementations of this application, one micro-nano columnar structure may be made of one material. Specifically, micro-nano columnar structures with a same height may be made of one material, and micro-nano columnar structures with another height are made of another material. Different materials have different Young's moduli. In an example, refer to FIG. 8. A sub-diagram (a) in FIG. 8 shows that all micro-nano columnar structures are made of a same material A, and a sub-diagram (b) in FIG. 8 shows that micro-nano columnar structures with a same height are made of one material (that is, a material A), and micro-nano columnar structures with another height are made of another material (that is, a material B). In conclusion, each individual micro-nano columnar structure is made of one material.

It should be further noted that, in some other implementations of this application, one micro-nano columnar structure may alternatively be made of materials with at least two different Young's moduli. Specifically, in a specific implementation of this application, the micro-nano columnar structure may be obtained by stacking at least two micro-nano columnar substructures, and one columnar substructure corresponds to a material with one Young's modulus.

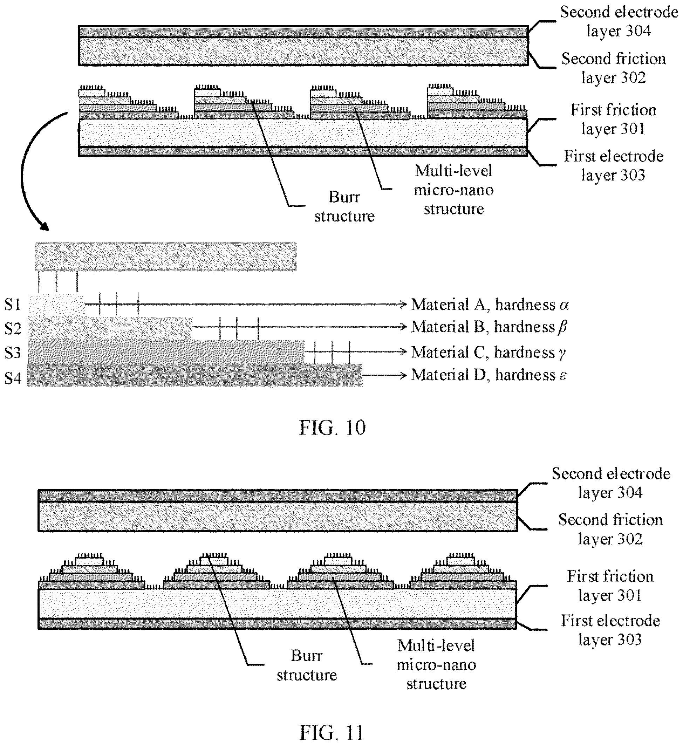

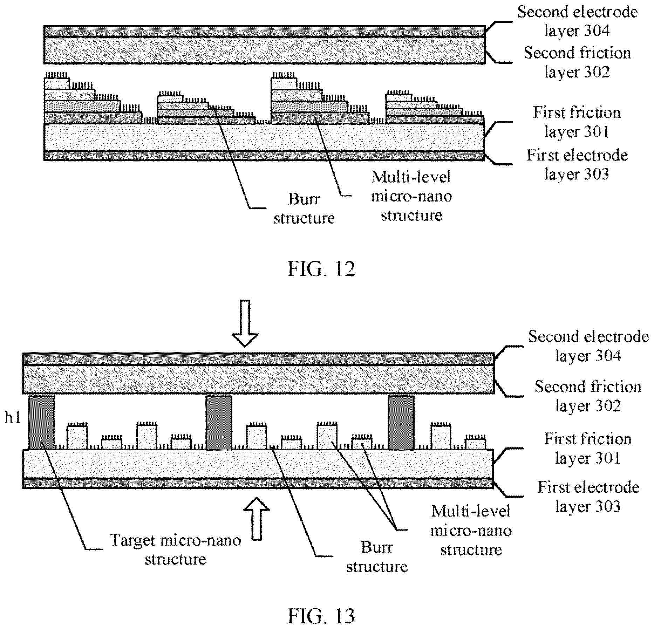

It should be noted that in some implementations of this application, the at least two micro-nano columnar substructures include but are not limited to the following:
(1) The at least two micro-nano columnar substructures have a same cross-sectional area. In an example, it is assumed that there are four columnar substructures in total, which are respectively A, B, C, and D. From a top view of the pressure sensor, cross-sectional areas of the four columnar substructures are the same, and are all S0. For example, for details, refer to FIG. 9. Details are not described herein again. It should be noted herein that heights of the four columnar substructures may be the same or may be different. FIG. 9 shows a case of different heights. Details are not described herein again.
(2) Values of cross-sectional areas of the at least two micro-nano columnar substructures are different. In this case, the at least two micro-nano columnar substructures are sequentially stacked in descending order of the values of the cross-sectional areas. In an example, it is assumed that there are four columnar substructures in total, which are respectively A, B, C, and D, values of cross-sectional lengths are respectively S1, S2, S3, and S4, and S1<S2<S3<S4. In this case, a stacking manner on the at least one friction layer is: D is located on the surface of the at least one friction layer, C is stacked on D, B is stacked on C, and A is stacked on B. Specifically, the stacking manner may be stacking in a manner of aligning the columnar substructures on one side (that is, forming a step shape) in FIG. 10, or may be stacking in a manner in which the columnar substructures are not aligned on each of two sides in FIG. 11. This is not specifically limited in this application. It should also be noted that, in this embodiment of this application, heights of the four columnar substructures may be the same or may be different. FIG. 10 and FIG. 11 show cases of a same height. Details are not described herein again. It should be further noted that the micro-nano columnar structures shown in FIG. 10 and FIG. 11 have a same height. In some implementations of this application, micro-nano columnar structures obtained by stacking columnar substructures made of materials with a plurality of different Young's moduli may have different heights. In other words, the plurality of micro-nano columnar structures have at least two different heights. As shown in FIG. 12, step-shaped micro-nano columnar structures have two heights. Actually, there may be more heights. Details are not described herein.

In addition, in actual application, when large pressure is applied externally, the first friction layer 301 and the second friction layer 302 may be completely attached together. In this case, the pressure sensor fails, sensitivity of the pressure sensor is reduced, and a pressure measurement range of the pressure sensor is narrowed. To reduce an occurrence probability of this case, in some other embodiments of this application, some target micro-nano structures with a preset height may be further grown on at least one of the first friction layer 301 and the second friction layer 302. The preset height may be referred to as a first preset height h1. The target micro-nano structure is configured to provide a support function under externally applied pressure, to avoid that the first friction layer 301 is directly attached to the second friction layer 302 under the action of the pressure. It should be noted that in this embodiment of this application, the first preset height h1 is greater than a height of any one of the micro-nano columnar structures with the at least two different heights.

For ease of understanding, the following uses an example for illustration. Specifically, refer to FIG. 13. FIG. 13 is a diagram of a structure of a TENG-based pressure sensor having a target micro-nano structure with a first preset height according to an embodiment of this application. It can be learned from FIG. 13 that under support of the target micro-nano structure, two friction layers are not easy to be completely attached together under externally applied pressure. This extends a pressure measurement range of the TENG-based pressure sensor, and improves sensitivity.

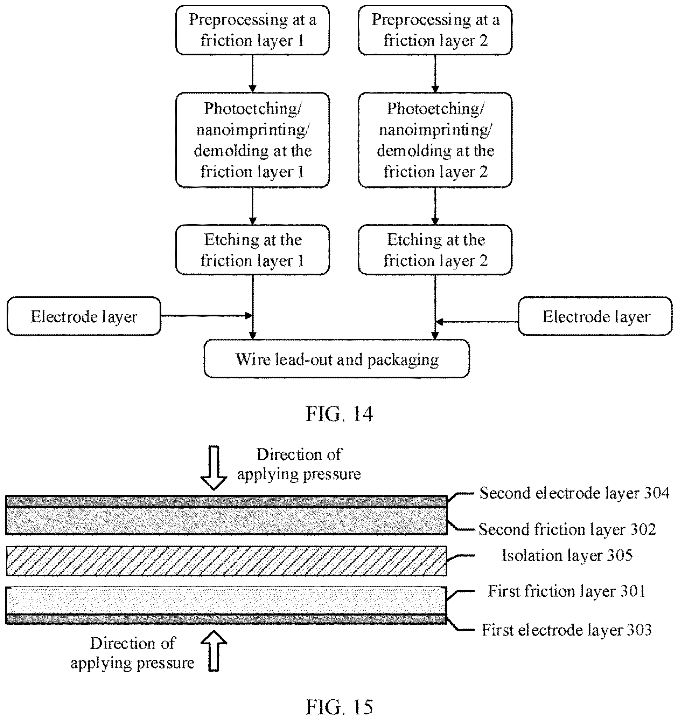

Based on the embodiments corresponding to FIG. 3 to FIG. 13, the following describes a process of processing the two friction layers of the TENG-based pressure sensor. Specifically, refer to FIG. 14. FIG. 14 is a diagram of a processing process of a friction layer according to an embodiment of this application. The first friction layer 301 is a friction layer 1, and the second friction layer 302 is a friction layer 2. The processing process includes the following steps.

### 1. Processing at the friction layer

In a processing process of a multi-level structure design, preprocessing and photoetching may be performed on a single friction layer or a plurality of friction layers, to obtain a plurality of micro-nano columnar structures with different heights, that is, the multi-level micro-nano structure, which may also be referred to as a level-1 micro-nano structure, and may be circular or polygonal. This is not specifically limited in this application. Then, a level-2 micro-nano structure is etched by using an etching process, that is, a burr structure is formed, to improve sensitivity of the TENG-based pressure sensor.

It should be noted that, in this embodiment of this application, the multi-level micro-nano structure may form a plurality of level-1 micro-nano columnar structures with different heights in a manner such as nanoimprinting or demolding.

It should be further noted that, in some implementations of this application, if the multi-level micro-nano structure form micro-nano structures with different heights or a same height in a stacked manner (as shown in FIG. 9 to FIG. 12), a processing manner may be stacking a plurality of materials with different Young's moduli and performing photoetching by using masks with different sizes and shapes to form a multi-step level-1 micro-nano structure, and then performing level-2 micro-nano processing to obtain a burr structure.

### 2. Electrode processing and wire lead-out

In this embodiment of this application, an electrode may be processed on an outer surface of the friction layer in a manner such as coating, attaching, or spin coating, and a conducting wire is led out.

### 3. Packaging

Processed film materials are stacked, that is, an electrode layer is attached to the friction layer, and packaging is performed in a manner such as glue spreading or press-fitting.

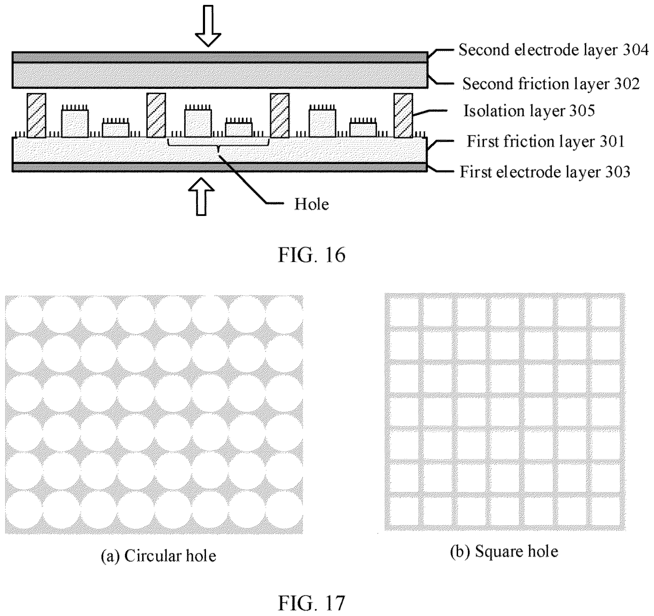

In addition, it should be noted that, in the foregoing implementation of this application, the processing manner in which some target micro-nano structures with the first preset height h1 are grown on at least one of the first friction layer 301 and the second friction layer 302 to provide a support function under externally applied pressure is complex. Therefore, to reduce process complexity, in some other implementations of this application, a solution of adding an isolation layer may be used. Specifically, refer to FIG. 15. FIG. 15 is a diagram of another structure of a TENG-based pressure sensor according to an embodiment of this application. In FIG. 15, in addition to the foregoing first friction layer 301, second friction layer 302, first electrode layer 303, and second electrode layer 304, the TENG-based pressure sensor further includes an isolation layer 305 with a preset height between the first friction layer 301 and the second friction layer 302. The preset height may be referred to as a second preset height h2, and the second preset height h2 is greater than a height of any one of the micro-nano columnar structures with the at least two different heights. The isolation layer 305 has at least one hole (not shown in FIG. 15) with a preset hole size, to provide a support function under externally applied pressure, so as to avoid that the first friction layer 301 is directly attached to the second friction layer 302 under the action of the pressure. In this case, the multi-level micro-nano structure is grown in the hole of the isolation layer 305. FIG. 16 is a diagram in which a multi-level micro-nano structure is grown in a hole in an isolation layer 305 according to an embodiment of this application.

It should be noted herein that the isolation layer 305 may alternatively be designed as splicing of isolation sublayers with different heights. For example, the isolation layer 305 may include m isolation sublayers, and a height of each isolation sublayer may be set to a different value. In other words, the second preset height h2 may be one height value, or may be a plurality of height values. This is not specifically limited in this application.

It should be noted that, in some implementations of this application, a shape of the at least one hole on the isolation layer 305 may be any shape that can be processed, for example, may be a circle (as shown in a sub-diagram (a) in FIG. 17), may be an ellipse, or may be a polygon. Further, the shape may be a regular polygon, for example, an equilateral triangle, a square (as shown in a sub-diagram (b) in FIG. 17), or a hexagon, or may be an irregular polygon, for example, a trapezoid or a non-equilateral triangle. The shape of the hole of the isolation layer 305 is not specifically limited in this application. In addition, not only the shape of the hole can be autonomously set based on a requirement, but also a hole area of the hole can be autonomously set. This is not limited in this application.

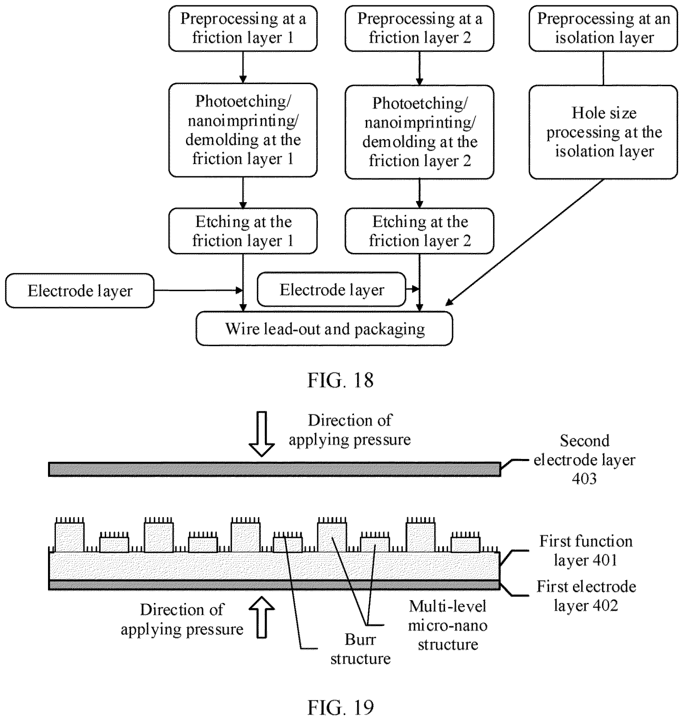

Similarly, based on the embodiments corresponding to FIG. 15 to FIG. 17, the following describes a process of processing the two friction layers and the isolation layer of the TENG-based pressure sensor. Specifically, refer to FIG. 18. FIG. 18 is a diagram of a processing process of a friction layer and an isolation layer according to an embodiment of this application. The first friction layer 301 is a friction layer 1, and the second friction layer 302 is a friction layer 2. The processing process includes the following steps.

### 1. Processing at the friction layer

In a processing process of a multi-level structure design, preprocessing and photoetching may be performed on a single friction layer or a plurality of friction layers, to obtain a plurality of micro-nano columnar structures with different heights, that is, the multi-level micro-nano structure, which may also be referred to as a level-1 micro-nano structure, and may be circular or polygonal. This is not specifically limited in this application. Then, a level-2 micro-nano structure is etched by using an etching process, that is, a burr structure is formed, to improve sensitivity of the TENG-based pressure sensor.

It should be noted that, in this embodiment of this application, the multi-level micro-nano structure may form a plurality of level-1 micro-nano columnar structures with different heights in a manner such as nanoimprinting or demolding.

It should be further noted that, in some implementations of this application, if the multi-level micro-nano structure form micro-nano structures with different heights or a same height in a stacked manner (as shown in FIG. 8 to FIG. 12), a processing manner may be stacking a plurality of materials with different Young's moduli and performing photoetching by using masks with different sizes and shapes to form a multi-step level-1 micro-nano structure, and then performing level-2 micro-nano processing to obtain a burr structure.

### 2. Electrode processing and wire lead-out

In this embodiment of this application, an electrode may be processed on an outer surface of the friction layer in a manner such as coating, attaching, or spin coating, and a conducting wire is led out.

### 3. Processing at the isolation layer

First, a surface of the isolation layer is preprocessed, and then drilling may be performed on the isolation layer by using a method such as mold pressing, imprinting, mechanical drilling, or laser drilling.

### 4. Packaging

Processed film materials are stacked, that is, an electrode layer is attached to the friction layer, the isolation layer is placed between two friction layers, and packaging is performed in a manner such as glue spreading or press-fitting.

In the foregoing implementation of this application, a measurement range of the TENG-based pressure sensor may be extended by using the multi-level micro-nano structure design or a combination of the isolation layer and the multi-level micro-nano structure, to improve sensitivity. In addition, the TENG-based pressure sensor maintains same or similar sensitivity to all static forces through area and height collaboration of the multi-level micro-nano structure. Alternatively, the TENG-based pressure sensor has approximately the same sensitivity to different static forces in a design such as the isolation layer (height, hole size, shape, and the like) and the multi-level structure (height, area, shape, and distribution).

The following describes an application scenario of the TENG-based pressure sensor provided in embodiments of this application, including but not limited to using the TENG-based pressure sensor in the following devices.

### 1. The TENG-based pressure sensor is deployed on a wearable device.

A human body pulse wave is important information for physiological detection on a human body. Measuring the pulse wave in a pressure manner requires that a sensor has extremely high sensitivity. In addition, to adapt to measuring accurate pulse wave information under different static forces, a pressure sensor needs to maintain high sensitivity to different static forces. Therefore, the TENG-based pressure sensor provided in the foregoing embodiments of this application may be deployed on a wearable device, to monitor a pulse fluctuation, so that detection sensitivity can be effectively improved.

### 2. The TENG-based pressure sensor is deployed on an electronic device having a touchscreen.

The electronic device having the touchscreen is a new type of computer device. For ease of operation, people use a touchscreen to replace a mouse, a keyboard, and the like. During use, a user first touches a touchscreen at a front end of a screen of an electronic device by using a finger or another object, and then the device locates selected information for input based on a location of an icon or a menu touched by the finger.

Currently, with the development of multimedia technologies and graphical user interfaces, a requirement for sensitivity of a touchscreen is increasingly high. Therefore, the TENG-based pressure sensor provided in the foregoing embodiments of this application may be deployed on an electronic device having a touchscreen, to detect a touch action, so that detection sensitivity can be effectively improved.

In addition to the foregoing two typical application scenarios, the pressure sensor provided in embodiments of this application may be further used on a wheeled mobile device (for example, an indoor robot or a vehicle (for example, an autonomous driving vehicle or a common vehicle)), for example, may be configured to detect pressure of a tire of a vehicle. Details are not described by using an example in this application.

### 2. Pressure sensors of piezoresistive, piezo-capacitive, and piezoelectric types

In addition to being used in a TENG-based pressure sensor, the multi-level micro-nano structure provided in embodiments of this application may also be used in another type of pressure sensor. The pressure sensor may be a pressure sensor of a piezoresistive type, a pressure sensor of a piezo-capacitive type, or a pressure sensor of a piezoelectric type. This is not specifically limited in this application. Specifically, refer to FIG. 19. FIG. 19 is a diagram of a structure of a pressure sensor according to an embodiment of this application. The pressure sensor includes one function layer (which may be referred to as a first function layer 401) and two electrode layers (which are respectively a first electrode layer 402 and a second electrode layer 403). The first electrode layer 402 and the second electrode layer 403 are made of a material having a conductive capability, for example, a metal material (gold, silver, copper, or the like) or a conductive material (graphene, indium tin oxide (indium tin oxides, ITO), silver nanowire, or the like). The first function layer 401 is connected to one of the first electrode layer 402 and the second electrode layer 403.

A surface of the first function layer 401 includes micro-nano columnar structures with at least two different heights, so that when there is pressure, a first signal corresponding to the pressure is induced on the first function layer 401. The first electrode layer 402 and the second electrode layer 403 are configured to generate a second signal based on the first signal. It should be noted that, in this embodiment of this application, the micro-nano columnar structures with different heights grown on the surface of the first function layer 401 are similar to those in the TENG-based pressure sensor in the foregoing manner 1. For details, refer to the description in the foregoing manner 1. Details are not described herein again.

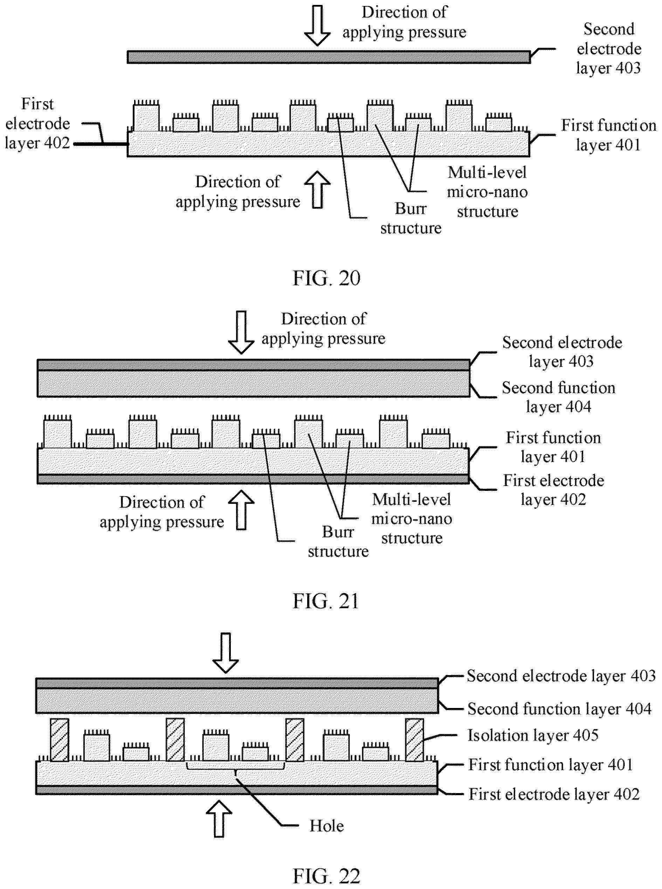

It should be noted that, in this embodiment of this application, the first electrode layer 402 and/or the second electrode layer 403 may alternatively be a conducting wire having a conductive capability, or the electrode layer may be a combination of a hierarchical material, an interpolation electrode, and a conducting wire, or the like. In an example in FIG. 20, a case in which the first electrode layer 402 is a conductive wire is shown (a case in which the second electrode layer 403 is a conducting wire is similar, and details are not described herein).

It should be further noted that in some implementations of this application, there may be one or two function layers. This is not limited in this application. Specifically, the pressure sensor may further include a function layer. Specifically, refer to FIG. 21. FIG. 21 is a diagram of another structure of a pressure sensor according to an embodiment of this application. The additionally added function layer may be referred to as a second function layer 404.

It should be further noted that, in some implementations of this application, the first function layer 401 may further additionally include an isolation layer with a preset height. Specifically, refer to FIG. 22. FIG. 22 is a diagram of another structure of a pressure sensor according to an embodiment of this application. The preset height of the isolation layer 405 may be referred to as a second preset height, and the second preset height is greater than a height of any one of the micro-nano columnar structures with the at least two different heights. The isolation layer 405 has at least one hole with a preset hole size, and the isolation layer 405 is configured to provide a support function under externally applied pressure, to avoid that the two electrode layers are directly attached under the action of the pressure (it is assumed that the electrode layer is not an electrode wire). In this case, the multi-level micro-nano structure is grown in the hole of the isolation layer. Specifically, the isolation layer 405 is disposed in a manner similar to that in the TENG-based pressure sensor in the foregoing manner 1. For details, refer to the description in the foregoing manner 1. Details are not described herein again.

It should be further noted that, in some implementations of this application, when the first signal is a first resistance (that is, the pressure sensor is of a piezoresistive type), the second signal is a second resistance, and the function layer is made of a material that has a resistance performance change (that is, has a resistance characteristic) under different pressure; or when the first signal is a first capacitance (that is, the pressure sensor is of a piezo-capacitive type), the second signal is a second capacitance, and the function layer is made of a material that has a capacitance performance change (that is, has a capacitance characteristic) under different pressure; or when the first signal is a first voltage (that is, the pressure sensor is of a piezoelectric type), the second signal is a second voltage, and the function layer is made of a material that has a piezoelectric performance change (that is, has a piezoelectric characteristic) under different pressure.

Structures of different types of pressure sensors may be the structure shown in FIG. 19 to FIG. 22, but selected materials and characteristics of function layers are slightly different. The following separately provides descriptions based on a principle of each type of pressure sensor.

### (1) Pressure sensor of the piezoresistive type

Using the piezoresistive sensor as an example, a function layer may include a substance having a conductive material, for example, may include graphene, carbon nanotube, graphene oxide, graphite, copper, silver nanowire, or ITO.

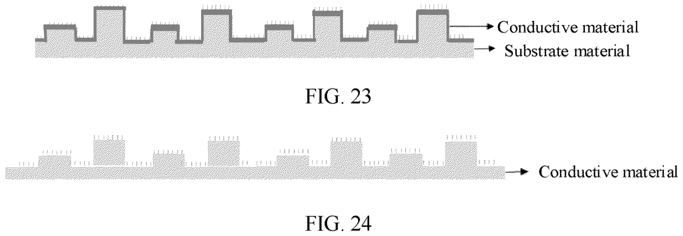

A structure of the function layer may include a conductive material and a substrate material. FIG. 23 is a diagram of a structure of a function layer according to an embodiment of this application. The substrate material may be a material such as PTFE, PET, PE, PDMS, or FEP. Optionally, the substrate material may include structures such as salt particles, sand particles, and micro-nano pellets with different sizes. The conductive material may be manufactured on a surface of the substrate material by using a processing method such as vapor deposition, sputtering, or spin coating. A ciliary structure on the surface may be produced through etching.

It should be noted that in some implementations of this application, the substrate material may not be used, but the conductive material is directly deployed on the electrode layer, as shown in FIG. 24.

A working principle of the piezoresistive sensor is as follows: When external pressure is applied, a resistance changes. The resistance change is mainly caused by a contact area change and an internal structure change. A multi-level micro-nano support structure is used, an isolation structure can extend a measurement range of the sensor, and structures with different heights can make upper and lower electrode surfaces in contact. If a height of the isolation layer is h, deformation of the electrode surface needs to exceed h in a conventional structure, and a great response is generated. A protrusion height of the function layer is s. In this case, if deformation of the upper and lower electrode surfaces is h-s, a contact area may change greatly, and an output resistance may change greatly. Therefore, the protrusion height can reduce a detection limit of the sensor. Design of different heights can enable the sensor to have high detection sensitivity to different static forces. As shown in FIG. 22, under an external pressure condition, an electrode plate is in contact with the protrusion height, and there is a low detection limit and high sensitivity under low pressure.

### (2) Pressure sensor of the capacitive type

Using the capacitive sensor as an example, a function layer may be implemented by using a non-conductive material.

A working principle of the capacitive sensor is as follows: When there is external pressure, a distance between upper and lower electrode surfaces of the capacitive sensor changes, and a dielectric constant of the function layer changes, resulting in a capacitance change. The change of the dielectric constant of the function layer is mainly as follows: Deformation of the function layer caused by the pressure causes the change of the dielectric constant. The isolation layer can extend a measurement range of the sensor, and structures with different heights can make upper and lower electrode surfaces in contact. If a height of the isolation layer is h, deformation of the electrode surface needs to exceed h in a conventional structure, and a great response is generated. A protrusion height of the function layer is s. In this case, if deformation of the upper and lower electrode surfaces is h-s, a contact area may change greatly. Therefore, deformation of the function layer is caused, and a change of the dielectric constant is caused. Then, an output capacitance changes greatly. Therefore, the protrusion height can reduce a detection limit of the sensor. Design of different heights can enable the sensor to have high detection sensitivity to different static forces. As shown in FIG. 22, under an external pressure condition, an electrode plate is in contact with the protrusion height, and there is a low detection limit and high sensitivity under low pressure.

### (3) Pressure sensor of the piezoelectric type

Using the piezoelectric sensor as an example, a function layer may optionally use a piezoelectric material and a piezoelectric electret.

A working principle of the piezoelectric sensor is as follows: When there is external pressure, a distance between upper and lower electrode surfaces of the piezoelectric sensor changes, or a piezoelectric voltage of the function layer changes, resulting in a capacitance change. The change of the dielectric constant of the function layer is mainly as follows: Deformation of the function layer caused by the pressure causes the change of the piezoelectric voltage. The isolation layer can extend a measurement range of the sensor, and structures with different heights can make upper and lower electrode surfaces in contact. If a height of the isolation layer is h, deformation of the electrode surface needs to exceed h in a conventional structure, and a great response is generated. A protrusion height of the function layer is s. In this case, if deformation of the upper and lower electrode surfaces is h-s, a contact area may change greatly. Therefore, deformation of the function layer is caused, and a change of the piezoelectric voltage is caused. Then, an output capacitance changes greatly. Therefore, the protrusion height can reduce a detection limit of the sensor. Design of different heights can enable the sensor to have high detection sensitivity to different static forces. As shown in FIG. 22, under an external pressure condition, an electrode plate is in contact with the protrusion height, and there is a low detection limit and high sensitivity under low pressure.

In the foregoing implementation of this application, the multi-level micro-nano structure (that is, micro-nano columnar structures with at least two different heights) may be used in the triboelectric nanogenerator-based pressure sensor, and pressure sensors of a piezoresistive type, a piezo-capacitive type, a piezoelectric type, and the like, and has wide applicability.

## Claims

1. A triboelectric nanogenerator-based pressure sensor, comprising:
a first friction layer, a second friction layer, and a first electrode layer, wherein the first friction layer and the second friction layer are made of materials having different electron gain and loss capabilities, the first electrode layer is made of a material having a conductive capability, and the first friction layer is connected to the first electrode layer;
a surface of at least one friction layer in the first friction layer and the second friction layer comprises micro-nano columnar structures with at least two different heights, so that when there is pressure, equal-quantity and opposite net charges corresponding to the pressure are induced on the first friction layer and the second friction layer; and
the first electrode layer is configured to generate a current based on the net charges.

2. The sensor according to claim 1, wherein the sensor further comprises:
a second electrode layer, wherein the second electrode layer is made of a material having a conductive capability, and the second friction layer is connected to the second electrode layer; and
that the first electrode layer is configured to generate a current based on the net charges comprises:
the first electrode layer and the second electrode layer are configured to generate a current based on the net charges.

3. The sensor according to claim 1 or 2, wherein the micro-nano columnar structure is made of materials with at least two different Young's moduli.

4. The sensor according to claim 3, wherein the micro-nano columnar structure is obtained by stacking at least two micro-nano columnar substructures, and each of the columnar substructures is made of a material with one Young's modulus.

5. The sensor according to claim 4, wherein
the at least two micro-nano columnar substructures have a same cross-sectional area; or
the at least two micro-nano columnar substructures are sequentially stacked in descending order of cross-sectional areas.

6. The sensor according to any one of claims 1 to 5, wherein the at least one friction layer further comprises:
a target micro-nano structure with a first preset height, wherein the first preset height is greater than a height of any one of the micro-nano columnar structures with the at least two different heights.

7. The sensor according to any one of claims 1 to 5, wherein the sensor further comprises:
an isolation layer with a second preset height, wherein the isolation layer has at least one hole with a preset hole size, the isolation layer is located between the first friction layer and the second friction layer, the micro-nano columnar structure is deployed in the hole of the isolation layer, and the second preset height is greater than a height of any one of the micro-nano columnar structures with the at least two different heights.

8. The sensor according to claim 7, wherein a shape of the at least one hole comprises any one or more of the following:
a circle, an ellipse, and a polygon.

9. The sensor according to any one of claims 1 to 8, wherein a shape of the micro-nano columnar structure comprises any one or more of the following:
a cylinder, a multi-prism shape, a cone, a multi-pyramid shape, a hemisphere, an inverted pyramid, and a pyramid.

10. The sensor according to any one of claims 1 to 9, wherein the micro-nano columnar structures with the at least two different heights are periodically arranged on the at least one friction layer.

11. The sensor according to any one of claims 1 to 10, wherein a burr structure is etched on the micro-nano columnar structure.

12. The sensor according to any one of claims 1 to 11, wherein the sensor is deployed on a wearable device, and is configured to monitor a pulse fluctuation.

13. The sensor according to any one of claims 1 to 11, wherein the sensor is deployed on an electronic device having a touchscreen, and is configured to detect a touch action.

14. A triboelectric nanogenerator-based pressure sensor, comprising:
a first friction layer, a second friction layer, and a first electrode layer, wherein the first friction layer and the second friction layer are made of materials having different electron gain and loss capabilities, the first electrode layer is made of a material having a conductive capability, and the first friction layer is connected to the first electrode layer;
a surface of at least one friction layer in the first friction layer and the second friction layer comprises a micro-nano columnar structure, so that when there is pressure, equal-quantity and opposite net charges corresponding to the pressure are induced on the first friction layer and the second friction layer, wherein the micro-nano columnar structure is made of materials with at least two different Young's moduli; and
the first electrode layer is configured to generate a current based on the net charges.

15. The sensor according to claim 14, wherein the sensor further comprises:
a second electrode layer, wherein the second electrode layer is made of a material having a conductive capability, and the second friction layer is connected to the second electrode layer; and
that the first electrode layer is configured to generate a current based on the net charges comprises:
the first electrode layer and the second electrode layer are configured to generate a current based on the net charges.

16. The sensor according to claim 14 or 15, wherein that the micro-nano columnar structure is made of materials with at least two different Young's moduli comprises:
the micro-nano columnar structure is obtained by stacking at least two micro-nano columnar substructures, and each of the columnar substructures is made of a material with one Young's modulus.

17. The sensor according to claim 16, wherein
the at least two micro-nano columnar substructures have a same cross-sectional area; or
the at least two micro-nano columnar substructures are sequentially stacked in descending order of values of cross-sectional areas.

18. The sensor according to any one of claims 14 to 17, wherein a plurality of micro-nano columnar structures have at least two different heights.

19. The sensor according to claim 18, wherein micro-nano columnar structures with different heights are periodically arranged on the at least one friction layer.

20. The sensor according to any one of claims 14 to 19, wherein the at least one friction layer further comprises:
a target micro-nano structure with a first preset height, wherein the first preset height is greater than a height of any one of the micro-nano columnar structures with the at least two different heights.

21. The sensor according to any one of claims 14 to 19, wherein the sensor further comprises:
an isolation layer with a second preset height, wherein the isolation layer has at least one hole with a preset hole size, the isolation layer is located between the first friction layer and the second friction layer, the micro-nano columnar structure is deployed in the hole of the isolation layer, and the second preset height is greater than a height of any one of the micro-nano columnar structures with the at least two different heights.

22. An electronic device, wherein the device comprises the pressure sensor according to any one of claims 1 to 21.
